# EUROPÄISCHE PATENTSCHRIFT

(11) **EP 2 893 775 B1**
(45) Veröffentlichungstag und Bekanntmachung des Hinweises auf die Patenterteilung: **31.03.2021**
(21) Anmeldenummer: 13759171.5
(22) Anmeldetag: 04.09.2013
(51) Int. Cl.: H05B 47/105, H05B 45/20, H05B 47/11, F21S 8/06, F21V 23/04, H05B 47/10

(54) **LEUCHTE**
LIGHT FITTING
LUMINAIRE

(30) Priorität: 04.09.2012 DE 202012103365 U
(43) Veröffentlichungstag der Anmeldung: 15.07.2015
(73) Patentinhaber: Zumtobel Lighting GmbH, 6850 Dornbirn (AT)
(72) Erfinder: ECKBAUER, Verena, A-6850 Dornbirn (AT); BÖHNEL, Michael, A-6850 Dornbirn (AT)
(74) Vertreter: Kiwit, Benedikt
(86) Internationale Anmeldenummer: PCT/EP2013/068211
(87) Internationale Veröffentlichungsnummer: WO 2014/037359

(56) Entgegenhaltungen:
- EP-A1- 1 551 178
- WO-A1-01/99474
- WO-A1-2008/146232

## Beschreibung

Die vorliegende Erfindung betrifft eine Leuchte mit mehreren Leuchtmitteln zur Lichtabgabe, die in einem Leuchtengehäuse aufgenommen sind und mittels einer Steuerung auf Basis von mittels Sensoren erfasster Daten angesteuert werden, sowie eine Leuchtenumgebung und ein Leuchtensystem aufweisend die Leuchte.

Aus dem Stand der Technik sind Leuchten mit Sensoren bekannt. So gibt es beispielsweise Leuchten, welche mit Bewegungssensoren ausgestattet sind und bei Erfassen eines sich bewegenden Objektes die Leuchte eingeschaltet wird. Auch gibt es Leuchten, welche mit einem Lichtsensor ausgestattet sind und beispielsweise ab einem gewissen Schwellenwert eines Umgebungslichtes die Leuchte ein- bzw. ausschalten.

Die WO 01 / 99 474 A1 zeigt eine Leuchtenanordnung mit einem Sensor zum Messen elektromagnetischer Strahlung in Form von sichtbarem Licht und Infrarotlicht in einem Raum. Mittels einer Steuerung kann die Beleuchtung in dem Raum in Abhängigkeit von der gemessenen Strahlung eingestellt werden.

Grundsätzlich bleibt das Problem bestehen, dass sich Leuchten nicht als Ganzes harmonisch in die Umgebung einfügen, was insbesondere bei Architekten als störend angesehen wird. Beispielsweise bei Strahlern ist es denkbar, deren Leuchtengehäuse projektspezifisch eine eigene Gehäusefarbe zuzuordnen. Darüber hinaus ist es bekannt, Leuchten mit Rahmen bereitzustellen, bei denen im Rahmen über Farbgestaltung einer opaken Randfläche eine fixe Farbe eingestellt werden kann. Alle vorgenannten bekannten Techniken haben jedoch den Nachteil, dass die Gehäusefarbe einmalig eingestellt wird und sich nicht an sich ändernde, äußere Einflüsse (wie beispielsweise eine Änderung des Umgebungslichtes) entsprechend anpasst, sodass die Leuchte letztlich nicht optimal und harmonisch in die Umgebung eingefügt ist.

Insbesondere bei Fernsehgeräten ist das sogenannte Ambilight-Prinzip bekannt, bei dem im Umgebungsbereich des Fernsehbildes ein Licht auf die rückseitige Wandfläche gerichtet wird, wobei das Licht sich an das Fernsehbild hinsichtlich seiner Farbe anpasst. Mit anderen Worten werden mittels des Ambilight- Prinzips Informationen auf die Umgebung projiziert, sodass das Bild des Fernsehgeräts vergrößert wirkt.

Es ist nunmehr eine Aufgabe der vorliegenden Erfindung, eine Leuchte bereitzustellen, die sich als Ganzes harmonisch in die Umgebung einfügt; ebenso eine entsprechende Leuchtenumgebung und ein Leuchtensystem.

Diese Aufgabe wird durch den Gegenstand der unabhängigen Ansprüche gelöst. Die abhängigen Ansprüche bilden den zentralen Gedanken der vorliegenden Erfindung in besonders vorteilhafter Weise weiter.

Die Erfindung betrifft eine Leuchte aufweisend mehrere Leuchtmittel zur Lichtabgabe, ein Leuchtengehäuse zur Aufnahme der Leuchtmittel, eine Steuerung zur Ansteuerung der Leuchtmittel sowie Sensoren zum Erfassen optischer Merkmale eines Umgebungsbereichs der Leuchte, insbesondere eines Montagebereichs der Leuchte. Unter optischen Merkmalen wird im Rahmen der Erfindung insbesondere die Farbe verstanden.

Die Steuerung ist derart ausgelegt, die Leuchtmittel zur Lichtabgabe auf Basis der durch die Sensoren (bspw. Farbsensoren oder Kameras) erfassten Daten einzeln anzusteuern, um die Leuchte visuell an den Umgebungsbereich anzupassen bzw. dem Umgebungsbereich anzugleichen.

Mittels der vorbczcichnctcn Leuchte ist es somit möglich, durch die an der Leuchte befestigten Sensoren Farbe der Umgebung (Wand, Decke, etc.) zu erkennen und abhängig von Farbe das Leuchtengehäuse über die einzeln angesteuerten Leuchtmittel in der passenden Farbe zu beleuchten bzw. Licht abzustrahlen. Auf diese Weise kann die Leuchte an den Umgebungsbereich beispielsweise der Montagefläche einfach und vorzugsweise automatisch angepasst werden, so dass sie sich optisch in die Umgebung einbettet und vorzugsweise quasi unsichtbar wird. Es ist somit auch möglich, nur eine einzige Leuchte in unterschiedlichen Umgebungen in gleicher Weise einzusetzen und somit die Hardware-Varianten der Leuchte erheblich zu reduzieren, was zugleich zu einer Reduzierung der Entwicklungs- und Herstellungskosten führt. Durch den einfachen Aufbau der Leuchte ist es zudem möglich, den erfindungsgemäßen Gegenstand sowohl im Falle einer abgehängten Leuchte als auch bei einer unmittelbar an der Montagefläche (beispielsweise Wand, Decke) montierten Leuchte einzusetzen. Bei einer direkten Montage erfassen die Sensoren folglich vorzugsweise den unmittelbaren Umgebungsbereich der Leuchte, im Falle einer abgehängten Montage auch den unmittelbar hinter bzw. oberhalb der Leuchte liegenden Bereich der Decke bzw. Wand.

Gemäß einer Ausgestaltungsform können die Leuchtmittel in bzw. an dem Leuchtengehäuse verteilt angeordnet sein, vorzugsweise in Form einer Matrix oder eines Rasters.

Die Leuchtmittel weisen wenigstens ein erstes Leuchtmittel zur primären Lichtabgabe (also beispielsweise zur Ausleuchtung eines Raumes) und wenigstens ein zweites Leuchtmittel zur Beleuchtung des Leuchtengehäuses auf. Die Steuerung ist dann derart ausgelegt, wenigstens die zweiten Leuchtmittel derart einzeln anzusteuern, dass das Leuchtengehäuse auf Basis der durch die Sensoren erfassten Daten beleuchtet wird, um das Leuchtengehäuse visuell an den Umgebungsbereich anzupassen bzw. dem Umgebungsbereich anzugleichen. Darüber hinaus ist es auch denkbar, dass auch die Lichtabgabe des ersten Leuchtmittels auf Basis der durch die Sensoren erfassten Daten entsprechend eingestellt bzw. angesteuert wird.

Das Leuchtengehäuse kann eine primäre Abstrahlfläche (im Folgenden auch als Abstrahlbereich bezeichnet) zur primären Lichtabgabe aufweisen, der das erste Leuchtmittel zugeordnet ist, und eine zweite Abstrahlfläche zur Beleuchtung des Leuchtengehäuses aufweisen, der das zweite Leuchtmittel zugeordnet ist, wobei der primäre Abstrahlbereich und der zweite Abstrahlbereich vorzugsweise durch einen Reflektor voneinander getrennt sind, der zu einer gerichteten Abstrahlung der primären Lichtabgabe ausgebildet und angeordnet ist.

Das Leuchtengehäuse kann Öffnungen aufweisen und/oder wenigstens teilweise aus einem lichtdurchlässigen, vorzugsweise opaken oder auch transparenten Material hergestellt sein. Die Öffnung bzw. das (opake) Material bilden vorzugsweise die zweite Abstrahlfläche. Die Leuchtmittel, vorzugsweise die zweiten Leuchtmittel, sind den Öffnungen bzw. den Bereichen aus lichtdurchlässigem bzw. opakem Material derart zugeordnet, dass sie durch die Öffnung nach außen abstrahlen bzw. die Bereiche von innen hinterleuchten, um somit die Leuchte visuell an den Umgebungsbereich anzupassen; vorzugsweise um das Leuchtengehäuse entsprechend zu beleuchten. Die Öffnungen können mit einem lichtdurchlässigen, vorzugsweise opaken Material ausgefüllt sein.

Als Leuchtmittel werden vorzugsweise LEDs oder OLEDs eingesetzt, vorzugsweise weiße LEDs und/oder RGB-LEDs und dergleichen; insbesondere Leuchtmittel, die durch entsprechende Ansteuerung eine unterschiedliche Lichtabgabe, insbesondere eine unterschiedliche Farblichtabgabe, ermöglichen. Vorzugsweise sind die LEDs in Clustern angeordnet, beispielsweise in Clustern jeweils aufweisend unterschiedliche monochromatische LEDs, um ein breites Farbspektrum je Leuchtmittel abzudecken. Die Sensoren umfassen vorzugsweise Farbsensoren zum Erfassen optischer Merkmale, insbesondere der Farbe, des Umgebungsbereichs der Leuchte. Gemäß einer bevorzugten Ausgestaltungsform können die Sensoren auch Kameras zum Erfassen der optischen Merkmale des Umgebungsbereichs der Leuchte sein.

Die Steuerung ist vorzugsweise derart ausgelegt, die Daten der Sensoren durchgehend oder in vorbestimmten Intervallen zu erfassen und die Leuchtmittel entsprechend kontinuierlich oder diskontinuierlich anzusteuern. Insbesondere kann vorgesehen sein, die Leuchtmittel zur Lichtabgabe in den jeweiligen Bereichen des Leuchtengehäuses hinsichtlich einer definierten Farbe auf Basis der Daten Sensoren anzusteuern. Die Leuchte selbst ist somit in der Lage, in einzelnen Bereichen die Lichtabgabe hinsichtlich ihrer Farbe zu modifizieren, sodass das Leuchtengehäuse wenigstens in einem äußeren Randbereich die Farbe des Umgebungsbereichs annimmt. Die visuelle Anpassung der Leuchte kann sich jedoch auch vom Rand des Leuchtengehäuses in Richtung und vorzugsweise bis zu dessen Zentrum hin erstrecken, wobei die Lichtanpassung zum Zentrum hin vorzugsweise kontinuierlich abnimmt bzw. sich vorzugsweise kontinuierlich abschwächt, sodass sich die Leuchte dementsprechend hinsichtlich ihrer farbigen Lichtabgabe in die Umgebung harmonisch einbettet.

Der Grad der visuellen Anpassung kann ferner manuell einstellbar sein, sodass durch einen Benutzer der Modus der optischen Einbettung individuell angepasst bzw. gewählt werden kann. Hierzu kann beispielsweise die Intensität der visuellen Anpassung oder der Kontrast stufenlos oder stufenweise einstellbar sein und somit vom Benutzer vorzugsweise frei gewählt werden.

Die Steuerung kann ferner einen Speicher mit vordefinierten Gehäusefarben aufweisen. In diesem Fall kann die Steuerung derart ausgelegt sein, die Leuchtmittel auf Basis der von den Sensoren erfassten Daten entsprechend einer dieser Daten zugeordneten Gehäusefarbe anzusteuern. Auf diese Weise kann die Rechenleistung reduziert werden, während gleichzeitig die Leuchte selbständig abhängig von der aktuellen Umgebung aus den vordefinierten Gehäusefarben die entsprechend der erfassten Umgebungsfarbe (vordefiniert) zugeordnete Gehäusefarbe auswählt.

Die Steuerung kann ferner derart ausgelegt sein, dass die Sensoren die optischen Merkmale des Umgebungsbereichs der Leuchte im ausgeschalteten Zustand der Leuchte, vorzugsweise unter Verwendung des Umgebungslichts, oder im eingeschalteten Zustand erfassen. Die optischen Merkmale des Umgebungsbereichs der Leuchte werden (dann) vorzugsweise während vorbestimmter PWM (Pulsweitenmodulation) Auszyklen erfasst, um besonders exakte Messergebnisse der einzustellenden Gehäusefarbe zu erzielen.

Die Sensoren sind vorzugsweise an bzw. in einer bezüglich der Leuchtmittel gegenüberliegenden Seite des Leuchtengehäuses, vorzugsweise an der Außenseite des Leuchtengehäuses, und dem Umgebungsbereichs der Leuchte, insbesondere einem Montagebereich der Leuchte, zugewandten Seite des Leuchtengehäuses angeordnet.

Gemäß einem Aspekt betrifft die Erfindung eine Leuchte aufweisend ein Leuchtengehäuse zur Aufnahme von Leuchtmitteln, wenigstens ein erstes Leuchtmittel zur primären Lichtabgabe, wenigstens ein zweites Leuchtmittel zur Beleuchtung des Leuchtengehäuses, eine Steuerung zum Ansteuern der Leuchtmittel, und Sensoren zum Erfassen optischer Merkmale eines Umgebungsbereichs der Leuchte, insbesondere eines Montagebereichs der Leuchte, wobei die Steuerung derart ausgelegt ist, wenigstens die zweiten Leuchtmittel derart einzeln anzusteuern, dass das Leuchtengehäuse auf Basis der durch die Sensoren erfassten Daten beleuchtet wird, um das Leuchtengehäuse visuell an den Umgebungsbereich anzupassen bzw. dem Umgebungsbereich anzugleichen.

Die Erfindung umfasst ferner die Anwendung einer Leuchte gemäß der Erfindung, in einem definierten Umgebungsbereich, wobei die Leuchte visuell an den Umgebungsbereich M angepasst ist bzw. dem Umgebungsbereich angeglichen ist.

Gemäß einem Aspekt betrifft die Erfindung ein Leuchtensystem aufweisend wenigstens zwei Leuchten gemäß der Erfindung mit jeweils einer Schnittstelle, vorzugsweise einer DALI (Digital Adressable Lightning Interface) Schnittstelle, sowie einer zentralen Steuerung, insbesondere einer DALI-Steuerung, zur (steuerungstechnischen) Verbindung mit den oder der mehreren Leuchten beispielsweise im Rahmen einer Gebäudeautomation.

Weitere Merkmale, Vorteile und Eigenschaften der Erfindung sollen nunmehr anhand von Ausführungsbeispielen mittels der Figuren der begleitenden Zeichnungen erläutert werden.
- Figur 1: zeigt eine Seitenansicht einer Leuchte gemäß einem ersten Ausführungsbeispiel der Erfindung,
- Figur 2: zeigt eine Unteransicht gemäß einer ersten Ausgestaltungsform der Leuchte der Figur 1,
- Figur 3: zeigt eine Unteransicht gemäß einer zweiten Ausgestaltungsform der Leuchte der Figur 1,
- Figur 4: zeigt eine seitliche Schnittansicht der Leuchte gemäß Figur 3,
- Figur 5: zeigt eine seitliche Schnittansicht einer Leuchte gemäß einem weiteren Ausführungsbespiel der Erfindung,
- Figur 6: zeigt eine visuelle Anpassung einer perspektivisch dargestellten Leuchte gemäß der Erfindung bei abgehängter Montage,
- Figur 7: zeigt eine visuelle Anpassung einer perspektivisch dargestellten Leuchte gemäß der Erfindung bei Wand- bzw. Deckenmontage, und
- Figur 8: zeigt die visuelle Anpassung einer weiteren perspektivisch dargestellten (Kugel-) Leuchte gemäß der Erfindung bei abgehängter Montage.

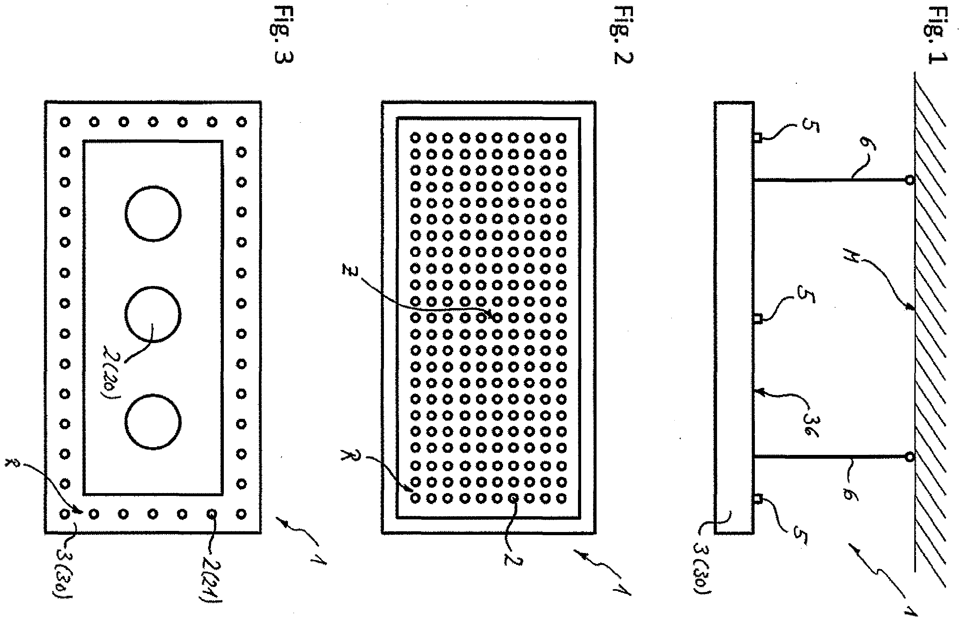

Die Figuren 1 bis 8 zeigen unterschiedliche Ausgestaltungsformen bzw. Ansichten einer erfindungsgemäßen Leuchte 1. Die Leuchte 1 weist mehrere Leuchtmittel 2 zur Lichtabgabe auf. Die Leuchtmittel 2 umfassen dabei insbesondere LEDs oder OLEDs, besonders vorzugsweise weiße LEDs und/oder RGB-LEDs und dergleichen. Die Leuchtmittel 2 sind vorzugsweise wenigstens zum Teil derart ausgebildet, dass sie eine Lichtabgabe in einem breiten Farbspektrum ermöglichen.

Die Leuchte 1 weist ferner ein Leuchtengehäuse 3 auf, in welchem die Leuchtmittel 2 aufgenommen sind.

Wie beispielsweise in Figur 2 dargestellt, können die Leuchtmittel 2 in bzw. an dem Leuchtengehäuse 3 verteilt angeordnet sein. Die Leuchtmittel 2 können hierzu unstrukturiert oder vorzugsweise strukturiert, beispielsweise in Form einer Matrix oder eines Rasters, angeordnet sein.

Es ist auch denkbar, dass die Leuchtmittel 2 ein erstes Leuchtmittel 20 zur primären Lichtabgabe (also beispielsweise zur Abstrahlung weißen Lichts bzw. zur Ausleuchtung eines Raumes) und wenigstens ein zweites Leuchtmittel 21 zur Beleuchtung des Leuchtengehäuses 3 aufweisen, wie in Figuren 3 bis 5 dargestellt. Die ersten Leuchtmittel 20 können dann beispielsweise auch eine Glühlampe, eine Halogenlampe oder eine Leuchtstofflampe oder dergleichen umfassen; vorzugsweise umfassen sie jedoch ebenfalls LEDs und dergleichen.

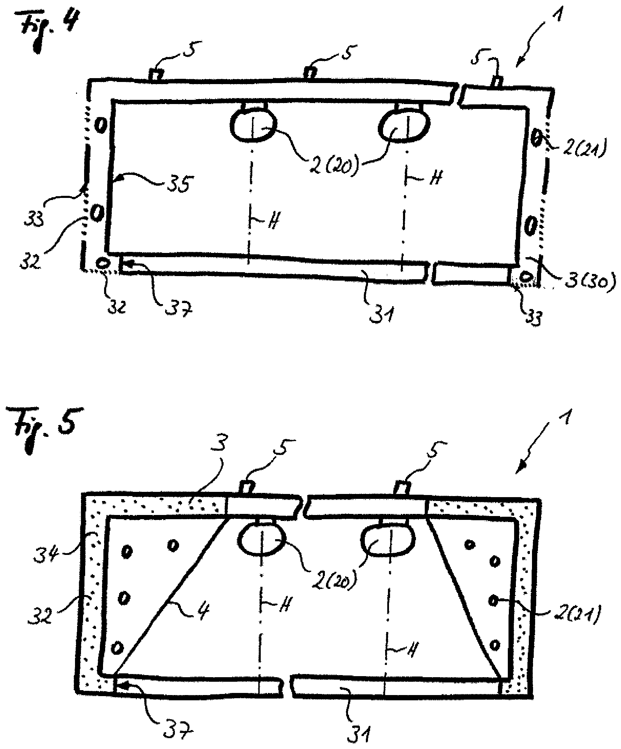

Es ist beispielsweise auch denkbar, dass die ersten Leuchtmittel 20, wie in Figur 2 dargestellt, in einem Zentrum des Leuchtengehäuses 3 beispielsweise in Form einer Matrix oder eines Rasters angeordnet sind, während die zweiten Leuchtmittel, wie beispielsweise in Figuren 3 und 4 dargestellt, innerhalb des Leuchtengehäuse-Rahmens 30 angeordnet sind. Auch können beispielsweise die in Figur 2 dargestellten Leuchtmittel 2 steuerungstechnisch in (wenigstens) zwei Gruppen eingeteilt werden, wobei eine erste, vorzugsweise im Zentrum des Rasters angeordnete Gruppe von Leuchtmitteln 2 die ersten Leuchtmittel 20 bilden, während die die im Zentrum liegenden ersten Leuchtmittel 20 umgebende Gruppe von Leuchtmitteln 2 die zweiten Leuchtmittel 21 bilden. Je nach Ansteuerung der Leuchtmittel 2 kann dann die Anzahl der ersten Leuchtmittel 20 vergrößert bzw. verkleinert werden, während die Anzahl der zweiten Leuchtmittel 21 entsprechend verkleinert bzw. vergrößert wird.

Wie insbesondere in den Figuren 4 und 5 gezeigt, kann das Leuchtengehäuse 3 eine primäre Abstrahlfläche bzw. Abstrahlbereich 31 zur primären Lichtabgabe aufweisen. Dieser primären Abstrahlfläche 31 sind vorzugsweise die ersten Leuchtmittel 20 zugeordnet. Ferner kann das Leuchtengehäuse dann eine zweite Abstrahlfläche bzw. Abstrahlbereich 32 zur Beleuchtung des Leuchtengehäuses 3 aufweisen. Der zweiten Abstrahlfläche 32 sind vorzugsweise die zweiten Leuchtmittel 21 zugeordnet.

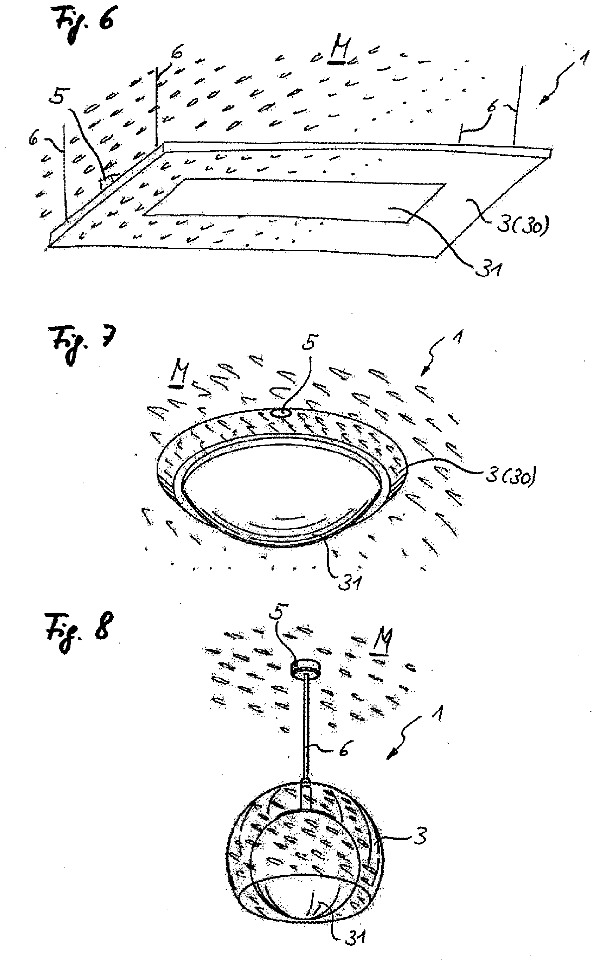

Die primäre Abstrahlfläche 31 kann durch eine Öffnung 37 in dem Leuchtengehäuse 3 gebildet sein und vorzugsweise in Hauptabstrahlrichtung H der ersten Leuchtmittel 20 gesehen vor diesen angeordnet sein. Die primäre Abstrahlfläche 31 kann ferner mit einem lichtdurchlässigen, vorzugsweise transparenten oder opaken Material ausgefüllt sein, welches entsprechend dem Design der Leuchte 1 als ebene Platte (vgl. Figur 6) oder auch gewölbt (vgl. Figuren 7 und 8) oder in sonstiger Weise ausgebildet sein kann. Das Material der ersten Abstrahlfläche 31 kann insbesondere bei Verwendung von LEDs als erste Leuchtmittel 20 Streupartikel und/oder Farbkonversionspartikel aufweisen. Die zweite Abstrahlfläche 32 kann ebenfalls mit einem lichtdurchlässigen, vorzugsweise opaken Material ausgefüllt bzw. aus einem solchen Material gebildet sein und ebenso Streu- oder Farbkonversionspartikel aufweisen, wie im Weiteren beschrieben ist.

Der primäre Abstrahlbereich 31 und der zweite Abstrahlbereich 32 sind vorzugsweise durch einen Reflektor voneinander getrennt, wobei der Reflektor zu einer gerichteten Abstrahlung der primären Lichtabgabe ausgebildet und angeordnet ist, wie dies in Figur 5 dargestellt ist. Alternativ ist es auch denkbar, dass der primäre Abstrahlbereich 31 und der zweite Abstrahlbereich 32 durch einen Teil des Leuchtengehäuse-Rahmens 30 getrennt sind, wie dies in Figur 4 dargestellt ist. In diesem Fall befinden sich die zweiten Leuchtmittel 21 vorzugsweise innerhalb des Leuchtengehäuse-Rahmens 30. Wenigstens die Innenseite oder das gesamte Leuchtengehäuse 3 ist im letztgenannten Fall lichtundurchlässig ausgebildet und besteht vorzugsweise aus einem Kunststoff oder Metall, wie Aluminium oder dergleichen. Besonders vorzugsweise ist die Innenseite 35 eines solchen Leuchtengehäuses 3 vorzugsweise reflektierend ausgebildet oder mit einer reflektierenden Schicht versehen.

Wie in Figur 4 dargestellt, kann das Leuchtengehäuse 3 Öffnungen 33 aufweisen; insbesondere in einem Fall, in dem das Leuchtengehäuse 3 ansonsten lichtundurchlässig ist. Die Leuchtmittel 2, vorzugsweise die sekundären Leuchtmittel 21, sind den Öffnungen 33 derart zugeordnet, dass sie durch die Öffnungen 33 nach außen abstrahlen. Die Öffnungen 33 können hierzu, wie zuvor bereits beschrieben, mit einem lichtdurchlässigen Material, insbesondere einem opaken Material, ausgefüllt sein. Alternativ ist es jedoch auch denkbar, dass das Leuchtengehäuse 3, wie in Figur 5 dargestellt, wenigstens teilweise aus einem lichtdurchlässigen, vorzugsweise opaken Material hergestellt ist. In diesem Fall sind die Leuchtmittel 2, vorzugsweise die sekundären Leuchtmittel 21, den Bereichen 34 aus lichtdurchlässigem bzw. opakem Material derart zugeordnet, dass sie diese Bereiche 34 von innen hinterleuchten. Die Öffnungen 33 bzw. lichtdurchlässigen Bereiche 34 bilden die zweite Abstrahlfläche 32.

Insbesondere bei Leuchten 1 zur abgehängten Montage, wie in den Figuren 1, 6 und 8 dargestellt, kann auch die rückwärtige Seite des Leuchtengehäuses 3, also die dem primären Abstrahlbereich gegenüberliegende Seite des Leuchtengehäuses 3, sekundäre Abstrahlflächen 32 beispielsweise in Form von Öffnungen 33 oder (opaken) Bereichen 34 aufweisen.

Die Leuchte 1 weist ferner Sensoren 5 auf. Die Sensoren 5 sind derart ausgelegt, dass sie optische Merkmale eines Umgebungsbereichs der Leuchte 1, insbesondere eines Montagebereichs M der Leuchte 1, erfassen. Unter optischen Merkmalen wird im Rahmen der Erfindung insbesondere die Farbe des Umgebungsbereichs verstanden, wie beispielsweise die des Montagebereichs M.

Die Sensoren können hierzu beispielsweise Farbsensoren aufweisen. Insbesondere können derartige Farbsensoren sogenannte True-Color-Sensoren sein, welche hinlänglich bekannt sind und an dieser Stelle nicht weiter beschrieben werden. Darüber hinaus ist es alternativ oder zusätzlich auch denkbar, Kameras als Sensoren einzusetzen.

Vor allem bei einer abgehängten Montage der Leuchte 1, wie in den Figuren 1 und 6 gezeigt, sind die Sensoren 5 vorzugsweise an bzw. in einer bzgl. der Leuchtmittel 2, insbesondere der ersten Leuchtmittel 20, gegenüberliegenden Seite des Leuchtengehäuses 3, vorzugsweise einer Außenseite 36 des Leuchtengehäuses 3 angeordnet und ferner dem Umgebungsbereich der Leuchte 1, insbesondere einem Montagebereich M der Leuchte 1, zugewandt. Wie in Figur 8 gezeigt, können die Sensoren 5 auch an einem dem Montagebereich M zugewandten Ende einer Montagevorrichtung 6 der Leuchte 1 nahe dem Montagebereich M angeordnet sein. Im Falle einer direkten Montage der Leuchte 1 an dem Montagebereich M (bspw. Decke, Wand, etc.) sind die Sensoren 5 vorzugsweise in einem seitlichen Bereich der Außenseite des Leuchtengehäuses 3 und möglichst nahe dem Montagebereich M angeordnet, wie dies in Figur 7 dargestellt ist.

Zusammengefasst ist es somit bevorzugt, dass die Sensoren 5 derart angeordnet sind, um vorzugsweise einen die Leuchte 1 umgebenden Bereich M beispielsweise einer Decke bzw. Wand, im Falle einer abgehängten Montage also auch den unmittelbar hinter bzw. oberhalb der Leuchte 1 liegenden Bereich, zu erfassen. Wie beispielsweise in den Figuren 7 und 8 gezeigt, können die Sensoren 5 in das Leuchtengehäuse 3 eingelassen sein, so dass sie im Wesentlichen nicht aus dem Leuchtengehäuse 3 hervorstehen und auf diese Weise 'versteckt' angeordnet sind.

Die Leuchte 1 weist ferner eine Steuerung zum Ansteuern der Leuchtmittel 2 auf, wobei die Steuerung in den Figuren nicht explizit dargestellt ist. Diese kann vorzugsweise innerhalb des Leuchtengehäuses 3 vorgesehen sein oder auch extern bereitgestellt werden. Die Funktion der Steuerung wird im Weiteren beschrieben:
Die Steuerung ist erfindungsgemäß derart ausgelegt, die Leuchtmittel 2 zur Lichtabgabe auf Basis der durch die Sensoren 5 erfassten Daten einzeln anzusteuern, um die Leuchte 1 visuell an den Umgebungsbereich anzupassen bzw. dem Umgebungsbereich anzugleichen. Hierzu ist die Steuerung mit den Sensoren 5 und den Leuchtmittel 2 verbunden und weist vorzugsweise einen Prozessor (CPU) zur Verarbeitung der empfangenen Sensorsignale und entsprechenden Ausgabe von Steuerbefehlen an die Leuchtmittel 2 auf.

Insbesondere im Fall der Ausführungsbeispiele der Figuren 3 bis 5 ist die Steuerung vorzugsweise derart ausgelegt, wenigstens die zweiten Leuchtmittel 21 derart einzeln anzusteuern, dass das Leuchtengehäuse 3 auf Basis der durch die Sensoren 5 erfassten Daten beleuchtet wird, um das Leuchtengehäuse 3 visuell an den Umgebungsbereich M anzupassen bzw. dem Umgebungsbereich M anzugleichen. Die Leuchte 1 ist folglich in der Lage, in einzelnen Bereichen die Lichtabgabe hinsichtlich ihrer Farbe derart zu modifizieren, dass sich die Leuchte 1 bzw. deren Leuchtengehäuse 3 harmonisch an die Umgebung anpasst und somit in die Umgebung einpasst. Aufgrund des einfachen und flexiblen Aufbaus der Leuchte 1 kann diese bei unterschiedlichsten Umgebungsausprägungen (Farbe, etc.) eingesetzt werden; dies bei immer gleichbleibend guter Anpassung des Leuchtengehäuses 3 an diese Umgebungen. Die Steuerung ist folglich derart ausgebildet, die Leuchtmittel 2 zur Lichtabgabe in jeweiligen Bereichen des Leuchtengehäuses 3 hinsichtlich einer definierten Farbe auf Basis der Daten der Sensoren 5 anzusteuern, sodass die Leuchte 1 quasi vor dem Hintergrund unsichtbar gemacht wird. Hierzu kann die Steuerung die Leuchtmittel 2 auf Basis der durch die Sensoren 5 erfassten Daten vorzugsweise derart einzeln ansteuern, dass das Leuchtengehäuse 3 wenigstens in einem äußeren Randbereich R die Farbe des Umgebungsbereichs M annimmt. Die visuelle Anpassung der Leuchte 1 erstreckt sich vorzugsweise von dem Rand(-bereich) R des Leuchtengehäuses 3 in Richtung und vorzugsweise bis zu dessen Zentrum Z in der horizontalen (also in der Zeichenebene der Figuren 2 und 3) gesehen, wobei die Lichtanpassung zum Zentrum Z hin vorzugsweise kontinuierlich abnimmt bzw. sich vorzugsweise kontinuierlich abschwächt. Es ist auch denkbar, dass insbesondere bei Verwendung von LEDs in Rasteranordnung gezielt einzelne Materialien in Farbe und Struktur auf dem Leuchtengehäuse 3 abgebildet werden können. Ferner ist es denkbar, dass die Steuerung derart ausgebildet ist, dass der Grad der visuellen Anpassung, also beispielsweise die Intensität der visuellen Anpassung oder der Kontrast, manuell einstellbar ist, vorzugsweise stufenlos oder auch stufenweise.

Darüber hinaus ist es denkbar, dass die Leuchte 1 bzw. die Steuerung einen Speicher (beispielsweise RAM oder ROM) aufweist, in dem vordefinierte Gehäusefarben abgelegt sind. Die Steuerung kann dann derart ausgelegt sein, die Leuchtmittel 2 auf Basis der von den Sensoren 5 erfassten Daten entsprechend einer dieser Daten zugeordneten Gehäusefarbe anzusteuern. Auf diese Weise kann Rechenleistung eingespart werden, während gleichzeitig auf ein fixes Set von n (n e N) Umgebungen pro Gehäusefarben zurückgegriffen werden kann und die Leuchte 1 selbständig, abhängig von der aktuellen Umgebung und den daher durch die Sensoren 5 gemessenen Daten, aus den vordefinierten Gehäusefarben die den ermittelten Daten entsprechende Gehäusefarbe wählt und die Leuchtmittel 2 entsprechend ansteuert. Die Steuerung kann ferner derart ausgelegt sein, dass sie unter Verwendung der Sensoren 5 die optischen Merkmale des Umgebungsbereichs M der Leuchte 1 im ausgeschalteten Zustand der Leuchte 1, vorzugsweise unter Verwendung des Umgebungslichtes oder im eingeschalteten Zustand erfasst. Die optischen Merkmale des Umgebungsbereichs der Leuchte 1 können zudem vorzugsweise während vorbestimmter PWM (Pulsweitenmodulation) Auszyklen erfasst werden, um die Genauigkeit der gemessenen Daten und somit der Ansteuerung der Leuchtmittel 2 zu steigern.

Die Steuerung kann ferner derart ausgelegt sein, die Daten der Sensoren 5 durchgehend oder in vorbestimmten Intervallen zu erfassen und die Leuchtmittel 2 entsprechend kontinuierlich oder diskontinuierlich anzusteuern. Bei durchgehender Erfassung wäre folglich eine fortlaufende Adaption der Gehäusefarbe im Vollbetrieb möglich, sodass auch direkte und indirekte Anteile aller im Raum befindlichen Lichtquellen durchgehend in die Gehäusefarbe-Berechnung der Steuerung eingehen. Auf diese Weise wäre beispielsweise auch ein Tunable-White-Effect möglich, d.h. die Gehäusefarbe würde sich über den Tag und bei entsprechend sich ändernden Lichtverhältnissen entsprechend mit ändern und das Leuchtengehäuse 3 somit fortwährend an seine Umgebung anpassen.

Die Steuerung kann ferner derart ausgelegt sein, auch die Lichtabgabe des ersten Leuchtmittels 20 auf Basis der durch die Sensoren 5 erfassten Daten einzustellen bzw. anzusteuern. Die ersten Leuchtmittel 20 können hierzu beispielsweise entweder weiße LEDs für warmweißes bzw. kaltweißes Licht aufweisen (bei denen sich also wenigstens die Farbtemperatur einstellen lässt) oder auch unterschiedlich farbige LEDs - vorzugsweise in Clustern angeordnet - aufweisen, mittels derer Farben in einem breiten Farbspektrum wiedergegeben werden können.

Die Erfindung umfasst ferner die Anwendung einer Leuchte 1 gemäß der Erfindung, in einem definierten Umgebungsbereich, wobei die Leuchte 1 visuell an den Umgebungsbereich M angepasst ist bzw. dem Umgebungsbereich angeglichen ist.

Des Weiteren umfasst die Erfindung ein Leuchtensystem mit Leuchten 1 gemäß der Erfindung aufweisend jeweils eine Schnittstelle, vorzugsweise eine DALI-Schnittstelle. Das Leuchtensystem umfasst ferner eine zentrale Steuerung, vorzugsweise eine DALI-Steuerung, die mit allen Leuchten 1 des Leuchtensystems verbunden ist.

Im Folgenden wird ein Verfahren zur visuellen Anpassung einer Leuchte 1 an einen Umgebungsbereich der Leuchte 1, insbesondere ein Montagebereich M der Leuchte 1, wie beispielsweise eine Wand oder Decke, beschrieben.

Zunächst wird eine Leuchte 1 aufweisend mehrere Leuchtmittel 2 zur Lichtabgabe und ein Leuchtengehäuse 3 zur Aufnahme der Leuchtmittel 2 sowie eine Steuerung zum Ansteuern der Leuchtmittel 2 und Sensoren 5 in einem Bereich bereitgestellt, vorzugsweise in einem Montagebereich montiert. Die Sensoren 5 - vorzugsweise Farbsensoren und/oder Kameras - erfassen optische Merkmale des Umgebungsbereichs der Leuchte 1, insbesondere des Montagebereichs M der Leuchte 1.

Die Leuchtmittel 2 werden dann auf Basis der durch die Sensoren 5 erfassten Daten durch die Steuerung einzeln angesteuert, sodass die Leuchte visuell an den Umgebungsbereich angepasst wird, indem sie beispielsweise die Farbe des Umgebungsbereichs annimmt. Die visuelle Anpassung der Leuchte 1 findet wenigstens in einem äußeren Randbereich R des Leuchtengehäuses 3 statt und erstreckt sich vorzugsweise von dem Rand R des Leuchtengehäuses 3 in Richtung und vorzugsweise bis zu dessen Zentrum Z (in dem vorzugsweise die ersten Leuchtmittel 20 vorgesehen sind). Die Lichtanpassung nimmt bzw. schwächt sich zum Zentrum Z hin vorzugsweise kontinuierlich ab. Die ersten Leuchtmittel 20 können hierzu entweder ebenfalls farblich an den Umgebungsbereich angepasst werden oder bei Verwendung weißer Lichtquellen wenigstens mit unterschiedlicher Farbtemperatur entsprechend warmweiß bis kaltweiß abstrahlen. Die Gehäusefarbe kann zudem aus einem Speicher mit vordefinierten Gehäusefarben gewählt werden; dies geschieht auf Basis der von den Sensoren 5 erfassten Daten, auf Basis derer die Leuchtmittel 2 entsprechend einer dieser Daten zugeordneten Gehäusefarbe, welche in dem Speicher vordefiniert abgelegt ist, angesteuert werden.

Die Triggerung der Messung der Sensoren 5 bzw. Einstellung der Lichtabgabe bzw. Lichtfarbe der Leuchtmittel 2 kann entweder automatisch vor Ort oder zentral (beispielsweise mittels DALI) durchgeführt werden. Im letztgenannten Fall ist es beispielsweise möglich, dass durch Sensoren 5 erfasste Daten beispielsweise die Feststellung einer Vergilbung einer Decke oder einer sonstigen Veränderung der Umgebung an eine zentrale Steuerung, beispielsweise eines DALI-Steuersystem eines Leuchtensystems, übermittelt werden und somit in die Berechnung der Gehäusefarbe unmittelbar eingehen.

Für weitere mögliche Verfahrensschritte wird vollumfänglich auf die vorhergehende Beschreibung insbesondere bzgl. der Steuerung verwiesen, die in gleicher Weise auch als Verfahrensschritte zu verstehen und als solche daher ebenfalls von der Erfindung mit umfasst sind.

Die Erfindung ist nicht auf die vorher beschriebenen Ausführungsbeispiele beschränkt, solange sie vom Gegenstand der folgenden Ansprüche umfasst ist. Insbesondere ist die Erfindung nicht auf eine bestimmte Anordnung, Größe oder Art der Leuchtmittel 2 beschränkt, ebenso ist die Erfindung nicht auf eine bestimmte Größe, Form oder Materialien des Leuchtengehäuses 3 beschränkt.

## Patentansprüche

1. Leuchte (1) aufweisend:
mehrere Leuchtmittel (2) zur Lichtabgabe,
ein Leuchtengehäuse (3) zur Aufnahme der Leuchtmittel (2),
eine Steuerung zum Ansteuern der Leuchtmittel (2), und
Sensoren (5) zum Erfassen optischer Merkmale eines Umgebungsbereichs der Leuchte (1), insbesondere eines Montagebereichs (M) der Leuchte (1),
wobei die Steuerung derart ausgelegt ist, die Leuchtmittel (2) zur Lichtabgabe auf Basis der durch die Sensoren (5) erfassten Daten einzeln anzusteuern, um die Leuchte (1) visuell wenigstens durch eine Änderung der Farbe und/oder
der Farbtemperatur an den Umgebungsbereich (M) anzupassen **dadurch gekennzeichnet, dass** die Leuchtmittel (2) wenigstens ein erstes Leuchtmittel (20) zur primären Lichtabgabe und wenigstens ein zweites Leuchtmittel (21) zur Beleuchtung des Leuchtengehäuses (3) aufweisen,
wobei die Steuerung derart ausgelegt ist, wenigstens das wenigstens zweite Leuchtmittel (21) derart einzeln anzusteuern, dass das Leuchtengehäuse (3) auf Basis der durch die Sensoren (5) erfassten Daten beleuchtet wird, um das Leuchtengehäuse (3) visuell an den Umgebungsbereich (M) anzupassen.

2. Leuchte (1) nach Anspruch 1, wobei die Leuchtmittel (2) in bzw. an dem Leuchtengehäuse (3) verteilt angeordnet sind, vorzugsweise in Form einer Matrix oder eines Rasters.

3. Leuchte (1) nach Anspruch 1 oder 2, wobei die Steuerung derart ausgelegt ist, die Lichtabgabe des wenigstens ersten Leuchtmittels (20) auf Basis der durch die Sensoren (5) erfassten Daten einzustellen.

4. Leuchte (1) nach einem der vorhergehenden Ansprüche, wobei das Leuchtengehäuse (3) eine primäre Abstrahlfläche (31) zur primären Lichtabgabe aufweist, der das wenigstens erste Leuchtmittel (20) zugeordnet ist, und eine zweite Abstrahlfläche (32) zur Beleuchtung des Leuchtengehäuses (3) aufweist, der das wenigstens zweite Leuchtmittel (21) zugeordnet ist, wobei die primäre Abstrahlfläche (31) und die zweite Abstrahlfläche (32) vorzugsweise durch einen Reflektor (4) voneinander getrennt sind, der zu einer gerichteten Abstrahlung der primären Lichtabgabe ausgebildet und angeordnet ist.

5. Leuchte (1) nach einem der vorhergehenden Ansprüche, wobei das Leuchtengehäuse (3) Öffnungen (33) aufweist und/oder wenigstens teilweise aus einem lichtdurchlässigen, vorzugsweise opaken Material (34) hergestellt ist, wobei die Leuchtmittel (2), vorzugsweise das wenigstens zweite Leuchtmittel (21), den Öffnungen (33) bzw. den Bereichen (34) aus lichtdurchlässigem Material derart zugeordnet sind, dass sie durch die Öffnungen (33) nach außen abstrahlen bzw. die Bereiche (34) von innen hinterleuchten, wobei die Öffnungen (33) vorzugsweise mit einem lichtdurchlässigen, besonders vorzugsweise opaken Material ausgefüllt sind.

6. Leuchte (1) nach einem der vorhergehenden Ansprüche, wobei die Leuchtmittel (2) LEDs oder OLEDs umfassen, vorzugsweise weiße LEDs und/oder RGB-LEDs und dergleichen, welche besonders vorzugsweise in Clustern angeordnet sind.

7. Leuchte (1) nach einem der vorhergehenden Ansprüche, wobei die Sensoren (5) Farbsensoren und/oder Kameras zum Erfassen optischer Merkmale, insbesondere der Farbe des Umgebungsbereichs der Leuchte (1), insbesondere eines Montagebereichs (M), wie beispielsweise einer Wand oder Decke, aufweisen.

8. Leuchte (1) nach einem der vorhergehenden Ansprüche, wobei die optischen Merkmale insbesondere die Farbe des Umgebungsbereichs der Leuchte (1), insbesondere eines Montagebereichs (M), wie beispielsweise einer Wand oder Decke, umfassen.

9. Leuchte (1) nach einem der vorhergehenden Ansprüche, wobei die Steuerung derart ausgelegt ist, die Daten der Sensoren (5) durchgehend oder in vorbestimmten Intervallen zu erfassen und die Leuchtmittel (2) entsprechend kontinuierlich oder diskontinuierlich anzusteuern.

10. Leuchte (1) nach einem der vorhergehenden Ansprüche, wobei die Steuerung derart ausgebildet ist, die Leuchtmittel (2) zur Lichtabgabe in den jeweiligen Bereichen des Leuchtengehäuses (3) hinsichtlich einer definierten Farbe auf Basis der Daten der Sensoren (5) anzusteuern.

11. Leuchte (1) nach einem der vorhergehenden Ansprüche, wobei die Steuerung die Leuchtmittel (2) auf Basis der durch die Sensoren (5) erfassten Daten derart einzeln ansteuert, dass das Leuchtengehäuse (3) wenigstens in einem äußeren Randbereich (R) die Farbe des Umgebungsbereichs (M) annimmt.

12. Leuchte (1) nach einem der vorhergehenden Ansprüche, wobei sich die visuelle Anpassung der Leuchte (1) vom Rand (R) des Leuchtengehäuses (3) in Richtung und vorzugsweise bis zu dessen Zentrum (Z) erstreckt, wobei die Lichtanpassung zum Zentrum (Z) hin vorzugsweise kontinuierlich abnimmt bzw. sich vorzugsweise kontinuierlich abschwächt.

13. Leuchte (1) nach einem der vorhergehenden Ansprüche, wobei die Steuerung derart ausgebildet ist, dass der Grad der visuellen Anpassung manuell einstellbar ist, wobei beispielsweise die Intensität der visuellen Anpassung oder der Kontrast stufenlos oder stufenweise einstellbar ist.

14. Leuchte (1) nach einem der vorhergehenden Ansprüche, wobei die Steuerung einen Speicher mit vordefinierten Gehäusefarben aufweist und derart ausgelegt ist, die Leuchtmittel (2) auf Basis der von den Sensoren (5) erfassten Daten entsprechend einer dieser Daten zugeordneten Gehäusefarbe anzusteuern.

15. Leuchte (1) nach einem der vorhergehenden Ansprüche, wobei die Steuerung derart ausgelegt ist, dass die Sensoren (5) die optischen Merkmale des Umgebungsbereichs (M) der Leuchte (1) im ausgeschalteten Zustand der Leuchte (1) unter Verwendung des Umgebungslichts oder im eingeschalteten Zustand erfassen, wobei die optischen Merkmale des Umgebungsbereichs (M) der Leuchte (1) vorzugsweise während vorbestimmter PWM-Auszyklen erfasst werden.

16. Leuchte (1) nach einem der vorhergehenden Ansprüche, wobei die Sensoren (5) an bzw. in einer bzgl. der Leuchtmittel (2) gegenüberliegenden Seite des Leuchtengehäuses (3), vorzugsweise einer Außenseite (36) des Leuchtengehäuses (3), und dem Umgebungsbereich der Leuchte (1), insbesondere einem Montagebereich (M) der Leuchte (1), zugewandten Seite des Leuchtengehäuses (3) angeordnet sind.

17. Anwendung einer Leuchte (1) gemäß einem der Ansprüche 1 bis 15 in einem definierten Umgebungsbereich (M), wobei die Leuchte (1) visuell an den Umgebungsbereich (M) angepasst ist bzw. dem Umgebungsbereich angeglichen ist.

18. Leuchtensystem aufweisend wenigstens zwei Leuchten (1) gemäß einem der Ansprüche 1 bis 16, welche jeweils ferner eine Schnittstelle, vorzugsweise einer DALI-Schnittstelle, aufweisen sowie eine zentralen Steuerung, insbesondere eine DALI-Steuerung, zur Verbindung mit den und/oder der Leuchten (1) über deren Schnittstelle.

## Claims

1. Lamp (1) comprising:
a plurality of lighting means (2) for light emission, a lamp housing (3) for receiving the lighting means (2), a control for controlling the lighting means (2), and sensors (5) for detecting optical features of a surrounding region of the lamp (1), in particular a mounting region (M) of the lamp (1), wherein the control is designed to individually control the lighting means (2) for light emission on the basis of the data detected by the sensors (5) in order to visually adapt the lamp (1) to the surrounding region (M) at least by changing the color and/or the color temperature, **characterized in that** the lighting means (2) comprise at least a first lighting means (20) for primary light emission and at least a second lighting means (21) for lighting the lamp housing (3), wherein the control is designed to individually control at least the at least second lighting means (21) in such a way that the lamp housing (3) is lighted on the basis of the data detected by the sensors (5) in order to visually adapt the lamp housing (3) to the surrounding region (M).

2. Lamp (1) according to Claim 1, wherein the lighting means (2) are arranged in a distributed manner, preferably in the form of a matrix or a grid, in or on the lamp housing (3).

3. Lamp (1) according to Claim 1 or 2, wherein the control is designed to adjust the light emission of the at least first lighting means (20) on the basis of the data detected by the sensors (5).

4. Lamp (1) according to any one of the preceding claims, wherein the lamp housing (3) comprises a primary radiating surface (31) for primary light emission, to which is assigned the at least first lighting means (20), and a second radiating surface (32) for lighting the lamp housing (3), to which is assigned the at least second lighting means (21), wherein the primary radiating surface (31) and the second radiating surface (32) are preferably separated from one another by a reflector (4), which is designed and arranged for directed radiation of the primary light emission.

5. Lamp (1) according to any one of the preceding claims, wherein the lamp housing (3) comprises openings (33) and/or is at least partially made of a light-transmissive, preferably opaque, material (34), wherein the lighting means (2), preferably the at least second lighting means (21), are assigned to the openings (33) or the regions (34) of light-transmissive material in such a way that they radiate outwardly through the openings (33) or that the regions (34) are backlit from the inside, wherein the openings (33) are preferably filled with a light-transmissive, particularly preferably opaque, material.

6. Lamp (1) according to any one of the preceding claims, wherein the lighting means (2) include LEDs or OLEDs, preferably white LEDs and/or RGB LEDs and the like, which are particularly preferably arranged in clusters.

7. Lamp (1) according to any one of the preceding claims, wherein the sensors (5) comprise color sensors and/or cameras for detecting optical features, in particular the color of the surrounding region of the lamp (1), in particular a mounting region (M), such as a wall or ceiling.

8. Lamp (1) according to any one of the preceding claims, wherein the optical features include in particular the color of the surrounding region of the lamp (1), in particular a mounting region (M), such as a wall or ceiling.

9. Lamp (1) according to any one of the preceding claims, wherein the control is designed to detect the data of the sensors (5) continuously or at predetermined intervals and to control the lighting means (2) correspondingly continuously or discontinuously.

10. Lamp (1) according to any one of the preceding claims, wherein the control is designed to control the lighting means (2) for light emission in the respective regions of the lamp housing (3) with respect to a defined color on the basis of the data of the sensors (5).

11. Lamp (1) according to any one of the preceding claims, wherein the control individually controls the lighting means (2) on the basis of the data detected by the sensors (5) in such a way that the lamp housing (3) takes on the color of the surrounding region (M) at least in an outer edge region (R).

12. Lamp (1) according to any one of the preceding claims, wherein the visual adaptation of the lamp (1) extends from the edge (R) of the lamp housing (3) in the direction and preferably up to its center (Z), wherein the light adaptation preferably decreases continuously or preferably declines continuously toward the center (Z).

13. Lamp (1) according to any one of the preceding claims, wherein the control is designed in such a way that the degree of visual adaptation can be adjusted manually, wherein, for example, the intensity of the visual adaptation or the contrast can be adjusted steplessly or stepwise.

14. Lamp (1) according to any one of the preceding claims, wherein the control comprises a memory with predefined housing colors and is designed to control the lighting means (2) on the basis of the data detected by the sensors (5) according to a housing color assigned to said data.

15. Lamp (1) according to any one of the preceding claims, wherein the control is designed in such a way that the sensors (5) detect the optical features of the surrounding region (M) of the lamp (1) in the switched-off state of the lamp (1) by using the ambient light or in the switched-on state, wherein the optical features of the surrounding region (M) of the lamp (1) are preferably detected during predetermined PWM off-cycles.

16. Lamp (1) according to any one of the preceding claims, wherein the sensors (5) are arranged on or in a side of the lamp housing (3) opposite the lighting means (2), preferably an outer side (36) of the lamp housing (3), and the side of the lamp housing (3) facing the surrounding region of the lamp (1), in particular a mounting region (M) of the lamp (1).

17. Use of a lamp (1) according to any one of Claims 1 to 15 in a defined surrounding region (M), wherein the lamp (1) is visually adapted to the surrounding region (M) or is matched to the surrounding region.

18. Lamp system comprising at least two lamps (1) according to any one of Claims 1 to 16, each of which furthermore comprises an interface, preferably a DALI interface, as well as a central control, in particular a DALI control, for connecting to the lamps (1) and/or connecting the lamps (1) via their interface.

## Revendications

1. Luminaire (1) comprenant :
une pluralité de moyens d'éclairage (2) servant à émettre de la lumière, un boîtier de luminaire (3) servant à loger les moyens d'éclairage (2), une commande servant à commander les moyens d'éclairage (2) et des capteurs (5) servant à détecter des caractéristiques optiques d'une zone environnante du luminaire (1), notamment une zone de montage (M) du luminaire (1) ; ladite commande étant conçue pour commander individuellement les moyens d'éclairage (2) de façon qu'ils émettent de la lumière en fonction des données détectées par les capteurs (5), afin d'adapter visuellement le luminaire (1) à la zone environnante (M) en modifiant au moins la couleur et/ou la température de couleur ; **caractérisé en ce que** les moyens d'éclairage (2) présentent au moins un premier moyen d'éclairage (20) servant à émettre de la lumière primaire et au moins un deuxième moyen d'éclairage (21) servant à éclairer le boîtier de luminaire (3), ladite commande étant conçue pour commander individuellement au moins l'au moins un deuxième moyen d'éclairage (21) de façon qu'il éclaire le boîtier de luminaire (3) en fonction des données détectées par les capteurs (5), afin d'adapter visuellement le boîtier de luminaire (3) à la zone environnante (M).

2. Luminaire (1) selon la revendication 1, dans lequel les moyens d'éclairage (2) sont disposés en étant répartis dans ou sur le boîtier de luminaire (3), de préférence sous la forme d'une matrice ou d'une grille.

3. Luminaire (1) selon la revendication 1 ou 2, dans lequel la commande est conçue de manière à régler l'émission de lumière de l'au moins un premier moyen d'éclairage (20) en fonction des données détectées par les capteurs (5).

4. Luminaire (1) selon l'une des revendications précédentes, dans lequel le boîtier de luminaire (3) présente une surface de rayonnement primaire (31) destinée à l'émission de lumière primaire et associée à l'au moins un premier moyen d'éclairage (20), et une deuxième surface de rayonnement (32) destinée à l'éclairage du boîtier de luminaire (3) et associée à l'au moins un deuxième moyen d'éclairage (21), ladite surface de rayonnement primaire (31) et ladite deuxième surface de rayonnement (32) étant de préférence séparées par un réflecteur (4) qui est conçu et disposé pour permettre un rayonnement ciblé de l'émission de lumière primaire.

5. Luminaire (1) selon l'une des revendications précédentes, dans lequel le boîtier de luminaire (3) présente des ouvertures (33) et/ou est fabriqué au moins en partie dans un matériau translucide, de préférence opaque (34), dans lequel les moyens d'éclairage (2), de préférence l'au moins un deuxième moyen d'éclairage (21), sont associés aux ouvertures (33) ou aux zones (34) en matériau translucide de manière à rayonner vers l'extérieur à travers les ouvertures (33) ou à rétro-éclairer lesdites zones (34) depuis l'intérieur, lesdites ouvertures (33) étant de préférence remplies d'un matériau translucide, de manière particulièrement préférée d'un matériau opaque.

6. Luminaire (1) selon l'une des revendications précédentes, dans lequel les moyens d'éclairage (2) comprennent des DEL ou DELO, de préférence des DEL blanches et/ou des DEL RVB et similaires, lesquelles sont disposées de manière particulièrement préférée en grappes.

7. Luminaire (1) selon l'une des revendications précédentes, dans lequel les capteurs (5) présentent des capteurs de couleur et/ou des caméras pour la détection de caractéristiques optiques, en particulier la détection de la couleur de la zone environnante du luminaire (1), en particulier une zone de montage (M), comme par exemple un mur ou un plafond.

8. Luminaire (1) selon l'une des revendications précédentes, dans lequel les caractéristiques optiques comprennent notamment la couleur de la zone environnante du luminaire (1), en particulier d'une zone de montage (M), comme par exemple un mur ou un plafond.

9. Luminaire (1) selon l'une des revendications précédentes, dans lequel la commande est conçue de manière à détecter les données des capteurs (5) en continu ou à intervalles prédéterminés et à commander en conséquence les moyens d'éclairage (2) de manière continue ou discontinue.

10. Luminaire (1) selon l'une des revendications précédentes, dans lequel la commande est conçue de manière à commander les moyens d'éclairage (2) pour l'émission de lumière dans les zones respectives du boîtier de luminaire (3) eu égard à une couleur définie en fonction des données des capteurs (5).

11. Luminaire (1) selon l'une des revendications précédentes, dans lequel la commande commande les moyens d'éclairage (2) individuellement en fonction des données détectées par les capteurs (5) de manière que le boîtier de luminaire (3) prenne la couleur de la zone environnante (M) au moins dans une zone de bord (R) externe.

12. Luminaire (1) selon l'une des revendications précédentes, dans lequel l'adaptation visuelle du luminaire (1) s'étend du bord (R) du boîtier de luminaire (3) en direction de son centre (Z) et de préférence jusqu'à celui-ci, l'adaptation de la lumière vers le centre (Z) diminuant de préférence en continu ou s'estompant de préférence en continu.

13. Luminaire (1) selon l'une des revendications précédentes, dans lequel la commande est conçue de manière à pouvoir régler manuellement le degré d'adaptation visuelle ; l'intensité de l'adaptation visuelle ou le contraste pouvant par exemple être réglé en continu ou par paliers.

14. Luminaire (1) selon l'une des revendications précédentes, dans lequel la commande présente une mémoire renfermant des couleurs de boîtier prédéfinies et est conçue de manière à commander les moyens d'éclairage (2) en fonction des données détectées par les capteurs (5) conformément à une couleur de boîtier associée à ces données.

15. Luminaire (1) selon l'une des revendications précédentes, dans lequel la commande est conçue de manière que les capteurs (5) détectent les caractéristiques optiques de la zone environnante (M) du luminaire (1) à l'état éteint du luminaire (1) au moyen de la lumière ambiante, ou à l'état allumé, lesdites caractéristiques optiques de la zone environnante (M) du luminaire (1) étant détectées de préférence lors de cycles d'arrêt MID prédéfinis.

16. Luminaire (1) selon l'une des revendications précédentes, dans lequel les capteurs (5) sont disposés sur ou dans un côté du boîtier de luminaire (3) opposé aux moyens d'éclairage (2), de préférence un côté extérieur (36) du boîtier de luminaire (3), et sur ou dans le côté du boîtier de luminaire (3) qui est tourné vers la zone environnante du luminaire (1), en particulier une zone de montage (M) du luminaire (1).

17. Utilisation d'un luminaire (1) selon l'une des revendications 1 à 15 dans une zone environnante définie (M), dans laquelle le luminaire (1) est adapté visuellement à la zone environnante (M) ou ajusté à la zone environnante.

18. Système de luminaire comprenant au moins deux luminaires (1) selon l'une des revendications 1 à 16, présentant en outre respectivement une interface, de préférence une interface DALI, ainsi qu'une commande centrale, en particulier une commande DALI, permettant un raccordement avec le et/ou les luminaires (1) par le biais de leur interface.
